(19) Europäisches Patentamt
European Patent Office
Office européen des brevets

(11) Veröffentlichungsnummer: **0 038 401**
**B1**

(12) **EUROPÄISCHE PATENTSCHRIFT**

(45) Veröffentlichungstag der Patentschrift: **05.12.84**

(51) Int. Cl.³: **G 01 L 1/24**, G 01 B 11/16, G 01 M 11/08

(21) Anmeldenummer: **81100707.9**

(22) Anmeldetag: **31.01.81**

(54) **Verfahren zur Überwachung von physikalischen Grössen von Bauteilen.**

(30) Priorität: **22.04.80 DE 3015391**

(43) Veröffentlichungstag der Anmeldung: **28.10.81 Patentblatt 81/43**

(45) Bekanntmachung des Hinweises auf die Patenterteilung: **05.12.84 Patentblatt 84/49**

(84) Benannte Vertragsstaaten: **CH FR GB IT LI NL**

(56) Entgegenhaltungen:
**EP - A - 0 025 815**
**WO - A - 79/00377**
**DE - A - 2 819 590**
**DE - A - 2 842 077**
**GB - A - 1 544 483**
**GB - A - 1 570 511**
**GB - A - 2 036 336**
**US - A - 2 972 051**

**APPLIED OPTICS, Band 18, Nr. 9, Mai 1979 G.B. HOCKER "Fiber-Optic Sensing of Pressure and Temperature", Seiten 1445 bis 1448**

(73) Patentinhaber: **Philips Kommunikations Industrie AG, Thurn-und-Taxis-Strasse 10, D-8500 Nürnberg 10 (DE)**

(72) Erfinder: **Federmann, Helmut, Dr.rer.nat., Holunderweg 17, D-5060 Bergisch Gladbach (DE)**
Erfinder: **Levacher, Friedrich Karl Dr.rer.nat., Medardusstrasse 24, D-5024 Brauweiler (DE)**

(74) Vertreter: **Meier, Friedrich, Dipl.-Ing. et al, c/o PHILIPS PATENTVERWALTUNG GMBH Billstrasse 80 Postfach 10 51 49, D-2000 Hamburg 28 (DE)**

**EP 0 038 401 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Überwachung von physikalischen Grössen von Bauteilen, bei dem die zu überwachenden Zonen der Bauteile mit mehreren von Hüllen umschlossenen Lichtleitern so verbunden werden, dass deren Anfänge und Enden zugänglich sind, wobei eine oder mehrere der optischen Eigenschaften der Lichtleiter beobachtet werden (DE-A-2 842 077).

Ein derartiges Verfahren kann für die Überwachung der Belastung und der Belastungsfähigkeit hochbeanspruchter Bauteile, deren Versagen schwerwiegende Folgen haben würde, verwendet werden. Es ist insbesondere geeignet für die Feststellung von beginnenden Brüchen oder unzulässiger Dehnung von mechanisch beanspruchten Bauteilen, beispielsweise in Fahrzeugen oder Kraftwerken.

Bekannt ist eine faseroptische Anordnung zur Messung der Stärke eines elektrischen Stromes unter Ausnutzung des Faraday-Effektes, wobei der Lichtweg für das Licht, dessen Polarisationszustand durch das den stromdurchflossenen Leiter umgebende Magnetfeld beeinflusst ist, durch den Kern einer optischen Faser markiert ist, die den Leiter in einer Anzahl von Windungen umgibt, wobei als optische Faser eine solche eingesetzt ist, die eine zirkulare Doppelbrechung aufweist, die mindestens in der Grössenordnung einer durch den Aufbau der Faser und deren gewundene Anordnung bedingten linearen Doppelbrechung liegt (DE-A-2 835 794). In dieser Anmeldung wird ein Messgerät für elektrische Stromstärken beschrieben, ein Hinweis auf die Anwendung des dabei benutzten Faraday-Effektes zur Überwachung von Bauteilen lässt sich ihr nicht entnehmen.

Bekannt ist ferner ein Taschen-Dosimeter für harte Strahlung, in dem eine spiralig aufgewickelte, für Strahlung empfindliche Lichtleitfaser und ein oder mehrere Lichtleiter mit definierter Dämpfung der Lichtleitung in einer undurchsichtigen Hülle angeordnet sind (US-A-2 972 051). In dieser Anmeldung wird die Zunahme der Lichtdämpfung einer Lichtleitfaser unter dem Einfluss harter Strahlung zur Feststellung der Strahlendosis benutzt, die ein das Dosimeter tragender Mensch aufgenommen hat. Auch dieser Anmeldung lässt sich kein Hinweis für die Überwachung von Bauteilen entnehmen.

Vorgeschlagen wurde ferner ein Verfahren zur Bruchüberwachung von auf Zug beanspruchten Bauteilen, bei dem in den bruchgefährdeten Zonen der Bauteile Lichtleitfasern befestigt oder eingelagert werden, und bei dem die Lichtleitung der Lichtleitfaser laufend oder in Zeitabständen überwacht wird (EP-A-0 025 815; Stand der Technik nach Art. 54(3) EPÜ). Dieser Vorschlag bezieht sich nur auf die Überwachung von Brüchen, die durch den gleichzeitigen Bruch der Lichtleitfaser signalisiert werden. Ein Hinweis auf weitere Möglichkeiten zur Überwachung von Bauteilen ist diesem Vorschlag nicht zu entnehmen.

Aufgabe der Erfindung ist es, ein Verfahren zur Überwachung von physikalischen Grössen von Bauteilen zu schaffen, mit dessen Hilfe in einfacher Weise auch eine quantitative Erfassung der zu überwachenden Grösse ermöglicht wird.

Diese Aufgabe wird erfindungsgemäss dadurch gelöst, dass mehrere Lichtleiter mit Hüllen unterschiedlicher Eigenschaften verwendet werden.

Ausgestaltungen der Erfindung für verschiedene Anwendungen sind in den Ansprüchen 2 bis 18 angegeben.

Die mit der Erfindung erzielbaren Vorteile bestehen insbesondere darin, dass ihre Anwendung die Möglichkeit schafft, Bauteile und insbesondere Verbundbauteile aus faserverstärkten Werkstoffen, die bisher mit grossen Sicherheitsfaktoren konstruiert wurden, wirtschaftlicher und dem Verwendungszweck besser angepasst zu dimensionieren. In vielen Fällen kann darüber hinaus die bisher für die Wartung nötige Stillegung von ganzen Anlagen oder Fahrzeugen ganz vermieden oder doch wesentlich verkürzt werden.

Ausführungsbeispiele der Erfindung sind in der Zeichnung dargestellt und werden im folgenden näher beschrieben. Es zeigen:

Fig. 1 ein auf Druck beanspruchtes Bauteil mit eingelagerten LLF und den für die Prüfung verwendeten Geräten,

Fig. 2 eine LLF mit Hülle im unbelasteten Zustand,

Fig. 3 eine LLF mit Hülle unter Belastung,

Fig. 4 eine in eine Hülle eingelagerte LLF für die Feststellung grösserer Dehnungen.

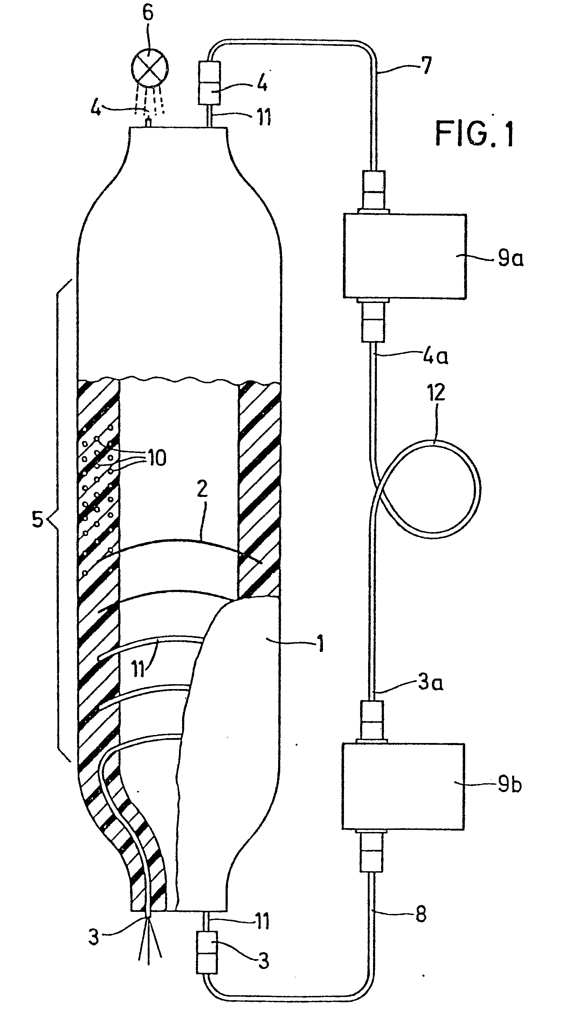

In der Fig. 1 ist als Beispiel für die Anwendung des anmeldungsgemässen Verfahrens ein Bauteil 1 schematisch dargestellt. Es kann sich hier um einen Druckbehälter, einen Hydraulikzylinder, eine Kardanwelle oder auch ein Abschussrohr handeln. Seine Wandungen bestehen vorzugsweise aus Kunststoff, in den Verstärkungsfasern 10 eingelagert sind. Innerhalb des mit 5 bezeichneten zu überwachenden Bereichs des Bauteil 1 sind Lichtleitfasern 2 anstelle einer oder mehrerer Verstärkungsfasern 10 bei der Herstellung eingearbeitet worden. Um die an sich recht geringe Bruchdehnung von LLF 2 an die zulässige Dehnung des Bauteil 1 anzupassen sind die LLF 2 mit Kunststoffhüllen 11 umgeben. Der Anfang einer LLF 2 ist mit 4, ihr Ende mit 3 bezeichnet. Angedeutet ist weiterhin eine Möglichkeit der Überwachung der LLF 2 auf Lichtleitung. Eine Lichtquelle 6 wird so vor den Anfang 4 der LLF 2 gehalten, dass an ihrem Ende 3 der Durchgang des Lichtes beobachtet werden kann. In bestimmten Fällen kann die Lichtquelle 6 auch durch Tageslicht ersetzt werden, wenn sich die Beobachtungsstelle 3 in einem gegen direkten Lichteinfall geschützten Raum befindet. Daneben sind der Anfang 4 und das Ende 3 einer LLF 2 mitsamt ihrer Hülle 11 mit einer bekannten Steckverbindung gezeigt. Über diese Steckverbindung kann der Anfang 4 einer LLF 2 über ein Verbindungskabel 7, das ebenfalls einen oder mehrere Lichtleiter enthält, mit dem Lichtsender 9a verbunden werden. In entsprechender Weise wird der Anfang 3 der gleichen LLF 2 über ein Lichtleiter enthaltendes Verbindungskabel 8 mit dem Lichtempfänger 9b verbunden. Lichtsender 9a und Lichtempfänger 9b können in bekannter Weise als Durchgangsprüfgerät für die Lichtleitung einer LLF 2 ausgelegt sein. Damit wäre eine Überwachung der LLF 2 auf Bruch möglich. Bei entsprechender Gestaltung des Lichtsenders 9a und des Lichtempfängers 9b kann aber auch eine Dämpfungsmessung der LLF 2 durchgeführt werden, mit der auch kleinere Dehnungswerte sicher gemessen werden können. Auf ähnliche Weise lassen sich auch Temperaturen im Inneren des Bauteils 1 oder auch eine aufgenommene Dosis harter Strahlung feststellen. Für die Feststellung einer aufgenommenen Strahlungs-Dosis kann eine Dämpfungsmessung in Abhängigkeit von der Wellenlänge des Lichtsenders 9 vorteilhaft sein, da sich LLF unter der Einwirkung harter Strahlung häufig lediglich verfärben. Der Lichtsender 9a sollte in diesem Fall auf verschiedene Lichtfarben umschaltbar oder durchstimmbar sein. Für feinere Messungen relativ kleiner physikalischer Zustandsänderungen kann es vorteilhaft sein, den Lichtsender 9a zusätzlich über eine Vergleichs-LLF 12, die den Zustandsänderungen nicht ausgesetzt ist, mit dem Lichtempfänger 9b zu verbinden. Für diesen Zweck erhalten beide Geräte 9a und 9b eine der bekannten Lichtverzweigungen. Enthält der Lichtsender 9a in diesem Fall eine Lichtquelle für kohärentes Licht, beispielsweise einen Laser, lassen sich mit dem Lichtempfänger 9b auftretende Interferenzen beobachten, womit selbst kleinste physikalische Zustandsänderungen einer Faser festgestellt werden können. In ähnlicher Weise kann der Lichtsender 9a eine Lichtquelle für polarisiertes Licht enthalten. Das Auftreten von Drehungen der Polarisationsebene in der LLF 2 zeigt dann das Vorhandensein von Magnetfeldern im Bereich des Bauteils 1 an.

Es ist ersichtlich, dass man eine Anpassung der Empfindlichkeit der beschriebenen Messverfahren an den Verwendungszweck dadurch erreichen kann, dass man die Zahl der Durchgänge der LLF 2 durch die zu untersuchende Zone 5 eines Bauteil 1 variiert. Eine grosse Zahl von Durchgängen der LLF 2 durch die Zone 5 ergibt durch die Summierung der Einwirkung physikalischer Zustandsänderungen vergrösserte Empfindlichkeit.

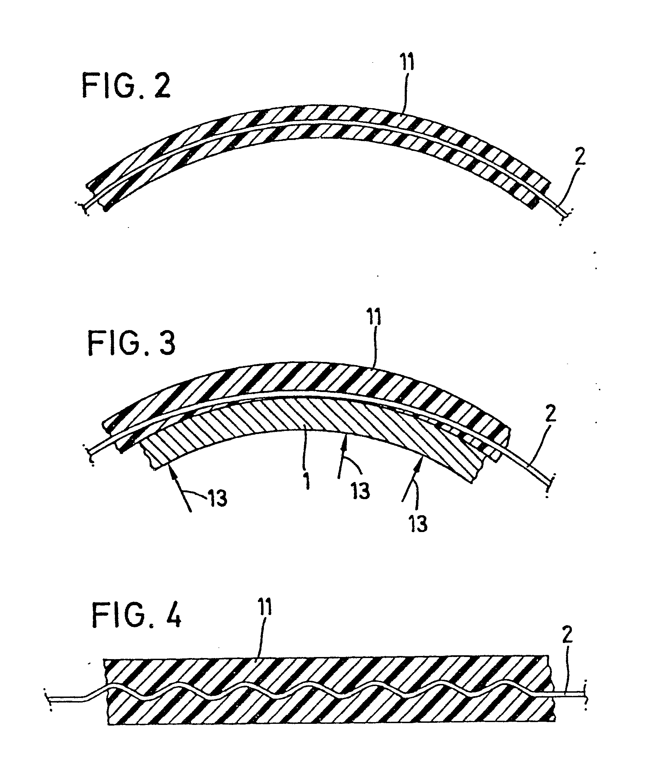

In Fig. 2 ist eine LLF 2 mit einer sie umgebenden elastischen Hülle 11 in vergrössertem Massstab dargestellt, wie sie beispielsweise für die Messung von Verformungen in Bauteile eingearbeitet werden kann. Die Fig. 2 zeigt den unbelasteten Zustand, in dem die LLF 2 zentrisch in der elastischen Hülle 11, die beispielsweise aus einem geschäumten Kunststoff bestehen kann, verläuft.

In Fig. 3 ist die gleiche LLF 2 in der elastischen Hülle 11 unter der Einwirkung von Verformungen gezeigt, wie sie unter der Einwirkung von durch Pfeile 13 angedeuteten Kräften entstehen können. Durch eine entsprechende Werkstoffwahl für die elastische Hülle 11 kann man erreichen, dass die LLF 2 bei auftretenden Verformungen ihre zentrische Lage in der Hülle 11 verlässt und sich unmittelbar an das Bauteil 1 anlegt, was bei weiterer Verformung zum Bruch führen würde.

In Fig. 4 ist die Anordnung einer LLF 2 in einer Hülle 11 dargestellt, wie sie für die Überwachung von Bauteilen benutzt werden kann, bei denen grosse Verformungen zulässig sind. Diese Ausgestaltung könnte beispielsweise in Förderbändern benutzt werden. Für derartige Anwendungen kann es auch vorteilhaft sein, die LLF 2 mäander- oder wendelförmig anzuordnen.

Insbesondere in solchen Fällen, bei denen eine visuelle Beobachtung des Endes 3 einer LLF 2 in einem Bauteil 1 ausreicht, kann es vorteilhaft sein, die Hülle 11 um die LLF 2 einzufärben. Dadurch kann die Erkennbarkeit der Eintrittsstellen der LLF 2 in Bauteile 1 wesentlich verbessert werden. Werden in einem Bauteil 1 mehrere LLF oder auch LLF-Gruppen in Hüllen 11 mit unterschiedlichen Eigenschaften angeordnet, kann es vorteilhaft sein, Hüllen 11 unterschiedlicher Eigenschaften auch unterschiedlich einzufärben. Auf diese Weise ist es möglich, unterschiedliche Grenzwerte von auftretenden Belastungen oder Verformungen gut sichtbar zu kennzeichnen. Ist beispielsweise der Lichtdurchgang durch eine Gruppe von LLF 2 in relativ wenig elastischen Hüllen 11, die beispielsweise grün eingefärbt sind, bereits unterbrochen, während der Lichtdurchgang durch eine andere Gruppe von LLF 2 in elastischeren Hüllen 11, die beispielsweise rot eingefärbt sind, noch ungestört ist, so lässt sich daraus die voraussichtliche Lebensdauer des Bauteils gut abschätzen, ohne eventuell recht aufwendige mechanische Messungen des Bauteils vornehmen zu müssen.

**Patentansprüche**

1. Verfahren zur Überwachung von physikalischen Grössen von Bauteilen, bei dem die zu überwachenden Zonen der Bauteile mit mehreren von Hüllen umschlossenen Lichtleitern so verbunden werden, dass deren Anfänge und Enden zugänglich sind, wobei eine oder mehrere der optischen Eigenschaften der Lichtleiter beobachtet werden, dadurch gekennzeichnet, dass mehrere Lichtleiter mit Hüllen unterschiedlicher Eigenschaften verwendet werden.

2. Verfahren nach Anspruch 1, dadurch gekennzeichnet, dass eine zeitweilige oder dauernde Verformung eines Bauteils durch Messung der Lichtdämpfung oder der Laufzeit von Lichtimpulsen in den Lichtleitern überwacht wird.

3. Verfahren nach Anspruch 1, dadurch gekennzeichnet, dass das Überschreiten bestimmter Verformungen des Bauteils durch Überwachen der Lichtleitung in den Lichtleitern festgestellt wird.

4. Verfahren nach Anspruch 1, dadurch gekennzeichnet, dass das Überschreiten mehrerer Verformungswerte des Bauteils durch Überwachen der Lichtleitung mehrerer Gruppen von Lichtleitern angezeigt wird.

5. Verfahren nach einem der Ansprüche 3 oder 4, dadurch gekennzeichnet, dass die Überwachung der Lichtleitung der in gut zugänglichen Bauteilen eingearbeiteten Lichtleiter durch visuelle Beobachtung eines Endes einer Lichtleitung erfolgt, wobei das andere Ende der Lichtleitung durch Tageslicht oder eine zusätzliche Lichtquelle beleuchtet wird.

6. Verfahren nach einem der Ansprüche 3 oder 4, dadurch gekennzeichnet, dass die Überwachung der Lichtleitung in den Lichtleitern durch ein über zusätzliche Lichtleiter anzuschliessendes Licht-Durchgangsprüfgerät erfolgt.

7. Verfahren nach einem der Ansprüche 1 bis 6, dadurch gekennzeichnet, dass die Lichtleiter in faserverstärkten Bauteilen anstelle einer oder mehrerer der Verstärkungsfasern eingearbeitet werden.

8. Verfahren nach einem der Ansprüche 1 bis 7, dadurch gekennzeichnet, dass die Lichtleiter unterschiedlich elastische Hüllen besitzen.

9. Verfahren nach einem der Ansprüche 1 bis 8, dadurch gekennzeichnet, dass die Hüllen zur besseren Erkennbarkeit der Enden der Lichtleiter eingefärbt werden.

10. Verfahren nach Anspruch 4 oder 8, dadurch gekennzeichnet, dass in einem Bauteil mehrere Gruppen von Lichtleitern Hüllen mit gruppenweise unterschiedlichen Eigenschaften besitzen.

11. Verfahren nach Anspruch 9 oder 10, dadurch gekennzeichnet, dass die Hüllen unterschiedlicher Eigenschaften unterschiedlich eingefärbt werden.

12. Verfahren nach einem der Ansprüche 1 bis 11, dadurch gekennzeichnet, dass die Lichtleiter im Bauteil oder die Lichtleitfasern in ihren Hüllen zur Überwachung grösserer Verformungen mäander-, wellen- oder wendelförmig angeordnet werden.

13. Verfahren nach Anspruch 1, dadurch gekennzeichnet, dass die Temperatur im Inneren von Bauteilen durch Messung der Lichtdämpfung der Lichtleiter überwacht wird.

14. Verfahren nach Anspruch 1, dadurch gekennzeichnet, dass Magnetfelder in Bauteilen durch Messung der Übertragungseigenschaften von polarisiertem Licht in den Lichtleitern festgestellt und/oder gemessen werden.

15. Verfahren nach Anspruch 1, dadurch gekennzeichnet, dass eine Dosis von harter Strahlung in Bauteilen durch Messung der Lichtdämpfung der Lichtleiter in Abhängigkeit von der Wellenlänge des zur Messung verwendeten Lichts gemessen wird.

16. Verfahren nach einem der Ansprüche 1, 2 oder 13 bis 15, dadurch gekennzeichnet, dass die Lichtleiter oder Gruppen von Lichtleitern so im Bauteil angeordnet werden, dass sie die zu überwachenden Zonen mehrmals durchlaufen.

17. Verfahren nach einem der Ansprüche 1, 2 oder 13 bis 16, dadurch gekennzeichnet, dass die Messung einer optischen Eigenschaft eines Lichtleiters durch Vergleich einer oder mehrerer mit durch eine Änderung der physikalischen Grösse beeinflussten Lichtleitern mit einem gleichen, nicht beaufschlagten Lichtleiter erfolgt.

18. Verfahren nach Anspruch 17, dadurch gekennzeichnet, dass zum Vergleich zweier Lichtleiter die Anfänge beider Lichtleiter mit monochromatischem Licht der gleichen Lichtquelle gespeist werden, dass die Enden beider Lichtleiter auf einen Lichtdetektor zusammengeführt werden, und dass das Auftreten von Interferenzen beobachtet wird.

## Claims

1. A method of controlling physical parameters of structural members, in which the zones of the structural members to be controlled are connected to several optical conductors enclosed by envelopes in a manner such that their beginnings and ends are accessible, one or several of the optical properties of the optical conductors being observed, characterized in that several optical conductors with envelopes having different properties are used.

2. A method as claimed in Claim 1, characterized in that a temporary or permanent deformation of a structural member is controlled by measuring the light attenuation of the travelling time of light pulses in the optical conductors.

3. A method as claimed in Claim 1, characterized in that the fact that given deformations of the structural member are exceeded is ascertained by controlling the light conduction in the optical conductors.

4. A method as claimed in Claim 1, characterized in that the fact that several deformation values of the structural elements are exceeded is demonstrated by controlling the light conduction of several groups of optical conductors.

5. A method as claimed in any one of Claims 3 or 4, characterized in that the control of the light conduction of the optical conductors provided in readily accessible structural members is effected by visual observation of one end of an optical conductor, the other end of the optical conductor being illuminated by day-light or by an additional light source.

6. A method as claimed in any one of Claims 3 or 4, characterized in that the control of the light conduction in the optical conductors is effected by means of a light-transmission test device to be connected via additional optical conductors.

7. A method as claimed in any one of Claims 1 to 6, characterized in that the optical conductors are provided in fibre-reinforced structural members instead of one or several of the reinforcing fibres.

8. A method as claimed in any one of Claims 1 to 7, characterized in that the optical conductors have envelopes of different elasticity.

9. A method as claimed in any one of Claims 1 to 8, characterized in that the envelopes are coloured in order to improve the identification of the ends of the optical conductors.

10. A method as claimed in Claim 4 or 8, characterized in that several groups of optical conductors in one structural member have envelopes which have groupwise different properties.

11. A method as claimed in Claim 9 or 10, characterized in that the envelopes having different properties are couloured differently.

12. A method as claimed in any one of Claims 1 to 11, characterized in that the optical conductors in the structural member or the optical conductor fibres in their envelopes are arranged in the form of a meander, a wave or a spiral for controlling larger deformations.

13. A method as claimed in Claim 1, characterized in that the temperature in the interior of structural members is controlled by measuring the light attenuation of the optical conductors.

14. A method as claimed in Claim 1, characterized in that magnetic fields are ascertained and/or measured in structural members by measuring the transmission properties of polarized light in the optical conductors.

15. A method as claimed in Claim 1, characterized in that a dose of hard radiation is measured in structural members by measuring the light attenuation of the optical conductors in dependence upon the wavelength of the light to be used for the measurement.

16. A method as claimed in Claims 1, 2 or 13 to 15, characterized in that the optical conductors or groups of optical conductors are arranged in the structural member in a manner such that they pass the zones to be controlled several times.

17. A method as claimed in any one of Claims 1, 2 or 13 to 16, characterized in that the measurement of an optical property of an optical conductor is effected by comparing one or more optical conductors influenced by a variation of the physical parameter with a similar non-influenced optical conductor.

18. A method as claimed in Claim 17, characterized in that for comparing two optical conductors, the beginnings of both optical conductors are supplied with monochromatic light originating from the same light source, in that the ends of both optical conductors are joined together onto a light detector and in that the occurrence of interferences is observed.

**Revendications**

1. Procédé pour contrôler des grandeurs physiques d'éléments de construction, selon lequel les zones de l'élément de construction à contrôler sont reliées à plusieurs conducteurs de lumière enveloppés dans des enveloppes d'une manière telle que leurs extrémités initiales et terminales soient accessibles, afin de surveiller une ou plusieurs de leurs propriétés optiques, caractérisé en ce qu'on utilise plusieurs conducteurs de lumière avec des enveloppes possédant des propriétés différentes.

2. Procédé suivant la revendication 1, caractérisé en ce qu'on contrôle une déformation en deux parties ou permanente d'un élément de construction en mesurant l'atténuation de la lumière ou le temps de parcours des impulsions lumineuses dans les conducteurs de lumière.

3. Procédé suivant la revendication 1, caractérisé en ce qu'on détecte le dépassement par excès de déformations déterminées de l'élément de construction en contrôlant le passage de la lumière dans les conducteurs de lumière.

4. Procédé suivant la revendication 1, caractérisé en ce qu'on indique le dépassement par excès de plusieurs valeurs de déformations de l'élément de construction en contrôlant le passage de la lumière dans plusieurs groupes de conducteurs de lumière.

5. Procédé suivant la revendication 3 ou 4, caractérisé en ce qu'on effectue le contrôle du passage de la lumière dans les conducteurs de lumière incorporés dans des éléments de construction bien accessibles en observant visuellement une extrémité d'un conducteur de lumière, l'autre extrémité du conducteur de lumière étant éclairée par la lumière du jour ou par une source de lumière supplémentaire.

6. Procédé suivant la revendication 3 ou 4, caractérisé en ce qu'on effectue le contrôle du passage de la lumière dans les conducteurs de lumière au moyen d'un appareil de vérification du passage de la lumière raccordé par l'intermédiaire de conducteurs de lumière supplémentaires.

7. Procédé suivant l'une quelconque des revendications 1 à 6, caractérisé en ce que les conducteurs de lumière sont incorporés à des éléments de construction renforcés par des fibres en lieu et place d'une ou de plusieurs fibres de renforcement.

8. Procédé suivant l'une quelconque des revendications 1 à 7, caractérisé en ce que les conducteurs de lumière possèdent des enveloppes élastiques différentes.

9. Procédé suivant l'une quelconque des revendications 1 à 8, caractérisé en ce que les enveloppes sont teintées afin d'améliorer les possibilités de reconnaissance des extrémités des conducteurs de lumière.

10. Procédé suivant la revendication 4 ou 8, caractérisé en ce que plusieurs groupes de conducteurs de lumière possèdent, dans un élément de construction, des enveloppes présentant des propriétés différentes par groupes.

11. Procédé suivant la revendication 9 ou 10, caractérisé en ce que les enveloppes qui présentent des propriétés différentes sont teintées de manière différente.

12. Procédé suivant l'une quelconque des revendications 1 à 11, caractérisé en ce que les conducteurs de lumière dans l'élément de construction ou les fibres optiques dans leurs enveloppes sont disposés de manière sinueuse, ondulée ou hélicoïdale pour contrôler des déformations plus importantes.

13. Procédé suivant la revendication 1, caractérisé en ce qu'on contrôle la température à l'intérieur des éléments de construction en mesurant l'atténuation lumineuse des conducteurs de lumière.

14. Procédé suivant la revendication 1, caractérisé en ce qu'on détecte des champs magnétiques dans les éléments de construction et/ou on les mesure en mesurant les propriétés de transmission de la lumière polarisée dans les conducteurs de lumière.

15. Procédé suivant la revendication 1, caractérisé en ce qu'on mesure une dose de rayonnement dur dans des éléments de construction en mesurant l'atténuation lumineuse des conducteurs de lumière en fonction de la longueur d'onde de la lumière à utiliser pour la mesure.

16. Procédé suivant l'une quelconque des revendications 1, 2 ou 13 à 15, caractérisé en ce que les conducteurs de lumière ou les groupes de conducteurs de lumière sont disposés dans l'élément de construction d'une manière telle qu'ils traversent plusieurs fois les zones à contrôler.

17. Procédé suivant l'une quelconque des revendications 1, 2 ou 13 à 16, caractérisé en ce que la mesure d'une propriété optique d'un conducteur de lumière s'effectue par comparaison d'un ou de plusieurs conducteurs de lumière influencés par une modification de la grandeur physique avec un même conducteur de lumière qui ne subit pas cette influence.

18. Procédé suivant la revendication 17, caractérisé en ce que pour comparer deux conducteurs de lumière, on alimente les extrémités initiales de ces deux conducteurs au moyen d'une lumière monochromatique de la même source de lumière, on amène les extrémités des deux conducteurs de lumière ensemble sur un détecteur de lumière et on observe l'apparition d'interférences.

6
4
4
11
7
FIG. 1
9a
4a
12
10
2
5
1
11
3a
9b
8
11
3
3

FIG. 2

11
2

FIG. 3

11
2
1
13
13
13

FIG. 4

11
2